# EUROPEAN PATENT SPECIFICATION

(11) **EP 3 564 353 B1**
(45) Date of publication and mention of the grant of the patent: **07.06.2023**
(21) Application number: 18020191.5
(22) Date of filing: 03.05.2018
(51) Int. Cl.: C12G 3/02, C12G 3/04, C12H 6/02

(54) **STRAWBERRY SPIRITS AND PRODUCTION METHOD THEREOF**
ERDBEERSPIRITUOSEN UND HERSTELLUNGSVERFAHREN DAFÜR
SPIRITUEUX DE FRAISE ET LEUR PROCÉDÉ DE PRODUCTION

(43) Date of publication of application: 06.11.2019
(73) Proprietor: R.G.C.C. Holdings AG, 6301 Zug (CH)
(72) Inventor: Papasotiriou, Ioannis, 6300 Zug (CH)
(74) Representative: Schmitz, Joseph

(56) References cited:
- .: "Strawberry Brandy", Webpage, 1 January 2016 (2016-01-01), page 1, XP55503342, U.S.A. Retrieved from the Internet: URL:https://www.bulgaridistillery.com/prod uct-page/strawberry-brandy [retrieved on 2018-08-30]
- .: "Strawberry Eau de Vie", , 1 January 2016 (2016-01-01), page 1, XP55503348, U.S.A. Retrieved from the Internet: URL:https://www.bulgaridistillery.com/prod uct-page/strawberry-eau-de-vie [retrieved on 2018-08-30]
- .: "Fruit Brandies", , 10 January 2016 (2016-01-10), page 1, XP55503382, U.S.A. Retrieved from the Internet: URL:https://www.batonrougebourbon.com/frui t-brandies/ [retrieved on 2018-08-30]
- DATABASE WPI Week 200904 Thomson Scientific, London, GB; AN 2009-A81211 XP002784310, & CN 101 250 470 A (LIAONING GUANGTIAN FOOD CO LTD) 27 August 2008 (2008-08-27)
- .: "RUDOLF JELÍNEK - Strawberry brandy", Company Webpage, 1 January 2014 (2014-01-01), pages 1-7, XP55503329, Vizovice, Czech Republic Retrieved from the Internet: URL:https://www.rudolfjelinek.com/products /detail~45-strawberry-brandy~.html [retrieved on 2018-08-30]
- Robert Kime: "Strawberry Wine Production", Strawberry Production Guide, NRAES-88, 1 January 1998 (1998-01-01), pages 1-2, XP55503088, U.S.A. Retrieved from the Internet: URL:https://cpb-us-e1.wpmucdn.com/blogs.co rnell.edu/dist/0/7265/files/2016/11/strawb errywine-26qut8y.pdf [retrieved on 2018-08-29]
- .: "Erdbeerwein | Rezept des Monats", Webpage, 5 July 2017 (2017-07-05), pages 1-3, XP55503080, Kitzingen, Germany Retrieved from the Internet: URL:https://www.arauner.com/rezept-des-mon ats/erdbeerwein [retrieved on 2018-08-29]
- YUMEI SUN ET AL: "Effect of added sulphur dioxide levels on the fermentation characteristics of strawberry wine : Effect of SO 2 on fermentation characteristics of strawberry wine", JOURNAL OF THE INSTITUTE OF BREWING., vol. 122, no. 3, 1 July 2016 (2016-07-01), pages 446-451, XP55503308, GB ISSN: 0046-9750, DOI: 10.1002/jib.342
- V. K. JOSHI ET AL: "Effect of Method of Preparation and Cultivar on the quality of Strawberry Wine", ACTA ALIMENTARIA, vol. 34, no. 4, 1 December 2005 (2005-12-01), pages 339-353, XP55503165, HU ISSN: 0139-3006, DOI: 10.1556/AAlim.34.2005.4.2
- DATABASE WPI Week 201678 Thomson Scientific, London, GB; AN 2016-64238H XP002784317, & KR 2016 0114450 A (SEON K S) 5 October 2016 (2016-10-05)
- F. López ET AL: "Chapter 10: Fruit Brandies" In: "Science and Technology of Fruit Wine Production", 1 January 2017 (2017-01-01), Elsevier, XP55503185, ISBN: 978-0-12-800850-8 pages 531-556, DOI: 10.1016/B978-0-12-800850-8.00010-7, * page 534, line 10 - line 20 * * page 534, line 27 - page 537, line 19 *
- Nermina Spaho: "Distillation Techniques in the Fruit Spirits Production" In: "Distillation - Innovative Applications and Modeling", 28 June 2017 (2017-06-28), InTech, XP55503111, ISBN: 978-953-51-3202-8 DOI: 10.5772/66774, * paragraphs 2.2, 3, 3.1, 4.1 *
- The Whisky Professor: "Does triple distillation make smooth whisky?", Scotchwhisky.com Magazine, 23 March 2016 (2016-03-23), pages 1-4, XP55503586, London, U.K. Retrieved from the Internet: URL:https://scotchwhisky.com/magazine/ask- the-professor/8796/does-triple-distillatio n-make-smooth-whisky/ [retrieved on 2018-08-30]
- .: "Slivovitz - Plum Brandy", , 1 January 2017 (2017-01-01), page 1, XP055503625, Borsice u Blatnice, Southern Moravia, Czech republic Retrieved from the Internet: URL:https://www.zufanek.cz/en/product/sliv ovitz/ [retrieved on 2018-08-31]
- .: "REGULATION (EC) No 110/2008", Official Journal of the European Union L 39/25, 13 February 2008 (2008-02-13), pages 1-39, XP55503107, Strasbourg, France Retrieved from the Internet: URL:https://eur-lex.europa.eu/LexUriServ/L exUriServ.do?uri=OJ:L:2008:039:0016:0054:E N:PDF [retrieved on 2018-08-29]
- G I Naumov ET AL: "Genetic identification of Saccharomyces bayanus var. uvarum, a cider-fermenting yeast", International Journal of Food Microbiology, 25 April 2001 (2001-04-25), pages 163-171, XP55681346, Retrieved from the Internet: URL:https://doi.org/10.1016/S0168-1605(00) 00515-8 [retrieved on 2020-03-31]
- Sudheer Kumar Yannam ET AL: "Y Effect of fermentation conditions on alcohol production by yeasts during processing of mango wine", , 1 January 2016 (2016-01-01), pages 1-1, XP55681382, Retrieved from the Internet: URL:https://www.semanticscholar.org/paper/ Y-Effect-of-fermentation-conditions-on-alc ohol-by-Yannam-Poondla/5656080aafba4141eb7 e83b67aaccac43670777b [retrieved on 2020-03-31]
- María López-Malo ET AL: "Metabolomic Comparison of Saccharomyces cerevisiae and the Cryotolerant Species S. bayanus var. uvarum and S. kudriavzevii during Wine Fermentation at Low Temperature", PLoS ONE, vol. 8, no. 3, 20 March 2013 (2013-03-20), page e60135, XP55725175, DOI: 10.1371/journal.pone.0060135

## Description

CN 101 250 470 A relates to a method for preparing strawberry brandy by using modern biological enzyme treatment technology. The strawberry fruit is washed; then digested after being crushed using pectinase; then inactivating the enzyme; then alcohol yeast fermentating using S. cerevisiae; and finally distillation under reduced pressure and then rectification.

Robert Kime, "Strawberry Wine Production", Strawberry Production Guide, NRAES-88, U.S.A., (19980101), pages 1 - 2,discloses the making of strawberry wine using wine yeast.

A L Does and L F Bisson "Comparison of glucose uptake kinetics in different yeasts", J Bacteriol. 1989 Mar; 171(3): 1303-1308 is a study, which investigated the kinetics of glucose uptake in laboratory wild-type strains of Saccharomyces cerevisiae of differing genetic backgrounds in both fermentative and respiratory growth.

The webpage of bulgaridistillery.com (https://www.bulgaridistillery.com/product-page/strawberry-eau-de-vie) discloses a Bulgarian-style strawberry eau-de-vie having a content of 40 vol.-% alcohol. Ripe strawberry fruits are fermented with French wine yeast for 21 to 28 days. After complete fermentation the resulting wine product is distilled through copper column.

### Strawberry spirits and production thereof

Strawberries are a widely grown hybrid species of the genus Fragaria (Rosaceae family), cultivated worldwide for their fruits. Strawberries are native to the temperate regions of the Northern Hemisphere, and cultivated varieties are widely grown throughout the world. The fruits are rich in vitamin C and are commonly eaten fresh as a dessert fruit, are used as a pastry or pie filling, and may be preserved in many ways.

Strawberries are low-growing herbaceous plants with a fibrous root system and a crown from which arise basal leaves. The leaves are compound, typically with three leaflets, sawtooth-edged, and usually hairy. The flowers, generally white, rarely reddish, are borne in small clusters on slender stalks arising, like the surface-creeping stems, from the axils of the leaves. As a plant ages, the root system becomes woody, and the "mother" crown sends out runners (e.g., stolons) that touch ground and root, thus enlarging the plant vegetatively. Botanically, the strawberry fruit is considered an "accessory fruit" and is not a true berry. The flesh consists of the greatly enlarged flower receptacle and is embedded with the many true fruits, or achenes, which are popularly called seeds.

The cultivated large-fruited strawberry (Fragaria ananassa) originated in Europe in the 18th century. Most countries developed their own varieties during the 19th century, and those are often especially suitable for the climate, day length, altitude, or type of production required in a particular region. Strawberries are produced commercially both for immediate consumption and for processing as frozen, canned, or preserved berries or as juice. Given the perishable nature of the berries and the unlikelihood of mechanical picking, the fruit is generally grown near centers of consumption or processing and where sufficient labor is available. The berries are hand-picked directly into small baskets and crated for marketing or put into trays for processing. Early crops can be produced under glass or plastic covering. Strawberries are very perishable and require cool dry storage.

The strawberry succeeds in a surprisingly wide range of soils and situations and, compared with other horticultural crops, has a low fertilizer requirement. It is, however, susceptible to drought and requires moisture-retaining soil or irrigation by furrow or sprinkler. Additionally, the plants are susceptible to nematodes and pathogenic soil fungi, and many growers sterilize the soil with chemicals such as methyl bromide prior to planting. Runner plants are planted in early autumn if a crop is required the next year. If planted in winter or spring, the plants are deblossomed to avoid a weakening crop the first year. Plants are usually retained for one to four years. Runners may be removed from the spaced plants, or a certain number may be allowed to form a matted row alongside the original parent plants. In areas with severe winters, plants are put out in the spring and protected during the following winters by covering the rows with straw or other mulches.

They have many other nutrients, vitamins, and minerals that contribute to the overall health benefits of these berries. These nutrients include vitamin C, folate, potassium, manganese, dietary fiber, and magnesium. The health benefits of strawberry include improved eye care, proper brain function, relief from high blood pressure, arthritis, gout, and various cardiovascular diseases. The polyphenolic and antioxidant content of strawberries makes them good for improving the immune system, preventing various types of cancers and for reducing the signs of premature aging.

The uniqueness of strawberries' spirits is based on the process of strawberry fermentation in contrast with other market products. Also they create a fine fruity aftertaste making them suitable to be consumed by the general public. Among their ingredients, they are found to contain a high sugar content of 4.9%, making them suitable for alcoholic fermentation process. Alcoholic fermentation is the anaerobic process of converting sugars into alcohol with the use of a fungus. Fermentation occurs in fruit containing sugars, such as grapes, strawberries, etc.

It is an object of the present invention to provide a method for making an alcoholic spirit using the fermentation process of strawberries, after they are washed and pulped, with the addition of Saccharomyces cerevisiae galactose - (minus) fungus (0.8 g/L).

The fermentation process begins with the washing and disinfection of the strawberries and their pulping. Disinfected and sterilized tanks are filled with the pulp and the fungus is added. The fungus used is Saccharomyces cerevisiae galactose -. The quantity of the fungus added is 0.8 g/L and it is diluted with a mixture of water and pulp, in equal quantities, ten times its volume. The water/pulp mixture is heated to a temperature 35-40 °C, preferably at 37 °C and the proper quantity of the fungus is added. Following the dilution of the fungus, the final mixture is cooled to room temperature and has a maximum temperature difference of 10 degrees Celsius from the pulp inside the tanks.

After reaching the appropriate temperature, the final mixture is added to the tank under continuous stirring. Due to intense CO2 emission, the first two days, the tanks remain open, while the rest 8 days of the fermentation, they are sealed only to be opened once a day in order to be stirred and they are re-sealed. Fermentation is achieved under anaerobic conditions, except the first 2 days, and the temperature inside the tank varies between 16 to 25 °C, while the pH of the strawberry must is 3-4. During or more commonly after fermentation, blossoming might occur and it is treated with addition of metabisulfit salt in concentration 240 g/L.

Once fermentation is completed, triple distillation of the strawberry must take place in temperatures between 76- 92 °C for the production of strawberry distillate. The distillates' alcohol concentration is greater than 37.5 %. It leaves a strawberry aroma and fruity aftertaste, whose maximum concentration in methanol is 1000 g in 100L alcohol and concentration in volatile compounds is greater than or equal to 200g in 100L alcohol.

Strawberry brandy is produced by mixing the first distillate of the strawberry must and strawberry must in 1.5:1 ratio, 76-92 °C and re-distillation of this mixture at 76-86 °C. It's an interesting and unusual product. The finish is punctuated by spirit alcohol and notes of stewed red berries.

Strawberry brandy contains above 36% alcohol by volume, maximum methanol concentration 200 gr in 100 L alcohol and concentration in volatile compounds is greater than or equal to 125 gr in 100 L alcohol.

An alcoholic strawberry spirit is produced by mixing strawberry distillate and strawberry brandy in any ratio, preferably in 1:3 ratio. This product contains above 36% alcohol by volume, whose maximum concentration in methanol is 1000 g in 100L alcohol and concentration in volatile compounds is greater than or equal to 200g in 100L alcohol.

The strawberry distillate and strawberry brandy can be mixed separately with any other alcoholic drink for cocktail preparation.

## Claims

1. A method for making an alcoholic spirit using a fermentation process of strawberries, after they are washed and pulped, with the addition of *Saccharomyces cerevisiae galactose* - fungus (0.8 g/L).

2. A method according to claim 1 , wherein the fungus *Saccharomyces cerevisiae galactose* - is diluted with a mixture of water and pulp, in equal quantities, ten times its volume, the water/pulp mixture is heated to a temperature 35-40 °C, preferably at 37 °C, and the proper quantity of the fungus is added, and that following the dilution of the fungus, the final mixture is cooled to room temperature and has a maximum temperature difference of 10 °C from the pulp inside a tank, after reaching the appropriate temperature, the final mixture is added to the tank under continuous stirring.

## Patentansprüche

1. Verfahren zur Herstellung einer alkoholischen Spirituose unter Verwendung eines Vergärungsverfahrens von Erdbeeren, nachdem sie gewaschen und zerstossen wurden, unter der Zugabe des Pilzes *Saccharomyces cerevisiae galactose* - *(0,8 g*/*l).*

2. Verfahren nach Anspruch 1, wobei der Pilz *Saccharomyces cerevisiae galactose* - mit einer Mischung aus Wasser und Pulpe zu gleichen Mengen, zehnfach gemäss seinem Volumen, verdünnt wird, die Wasser/Pulpen-Mischung auf eine Temperatur von 35 bis 40 °C, vorzugsweise auf 37 °C, erhitzt wird, und die geeignete Menge des Pilzes zugesetzt wird, und dass nachfolgend zur Verdünnung des Pilzes die endgültige Mischung auf Raumtemperatur abgekühlt wird und eine maximale Temperaturdifferenz von 10 Grad Celsius zur Pulpe innerhalb eines Tanks vorweist, nach Erreichen der geeigneten Temperatur, wird die endgültige Mischung unter ständigem Rühren in den Tank gegeben wird.

## Revendications

1. Un procédé de préparation d'un spiritueux alcoolique utilisant un processus de fermentation de fraises, après qu'elles aient été lavées et mises en pulpe, moyennant l'addition du champignon *Saccharomyces cerevisiae galactose* - (0,8 g/L).

2. Un procédé selon la revendication 1, dans lequel le champignon *Saccharomyces cerevisiae galactose* - est dilué avec un mélange d'eau et de pulpe, en quantités égales, dix fois son volume, le mélange d'eau/pulpe est chauffé à une température de 35 à 40°C, de préférence à 37°C, et la quantité appropriée du champignon est ajoutée, et que suivant la dilution du champignon, le mélange final est refroidi à la température ambiante et présente une différence de température maximale de 10 °C par rapport à la pulpe à l'intérieur d'un réservoir, après avoir atteint la température appropriée, le mélange final est ajouté au réservoir sous agitation continue.
